# EUROPÄISCHE PATENTSCHRIFT

(11) **EP 0 463 320 B1**
(45) Veröffentlichungstag und Bekanntmachung des Hinweises auf die Patenterteilung: **05.07.1995**
(21) Anmeldenummer: 91106894.8
(22) Anmeldetag: 27.04.1991
(51) Int. Cl.: G11B 23/023

(54) **Behälter für Magnetbandkassetten**
Holder for magnetic tape cassettes
Récipient pour cassettes à bande magnétique

(30) Priorität: 25.06.1990 DE 4020163
(43) Veröffentlichungstag der Anmeldung: 02.01.1992
(73) Patentinhaber: fischerwerke Artur Fischer GmbH & Co. KG, D-72178 Waldachtal (DE)
(72) Erfinder: Heizmann, Hans Peter, W-7298 Lossburg/Lombach (DE); Kaupp, Eduard, W-7244 Waldachtal/Tumlingen (DE); Nehl, Wolfgang, W-7244 Waldachtal/Tumlingen (DE); Rothfuss, Hartmut, W-7244 Waldachtal/Tumlingen (DE); Weber, Wilfried, W-7294 Schopfloch (DE)

(56) Entgegenhaltungen:
- EP-A- 0 290 717
- WO-A-87/06210
- DE-A- 2 542 622
- GB-A- 1 170 729
- GB-A- 2 185 878
- US-A- 3 603 478
- US-A- 3 677 396

## Beschreibung

Die Erfindung betrifft einen Behälter für Magnetbandkassetten mit aus einem mehrere Einschuböffnungen aufweisenden und durch Bodenplatten in Einzelkammern unterteilten Gehäuse gemäß der Gattung des Hauptanspruches. Solche Behälter sind z.B. aus GB-A- 1 170 729 bekannt.

Für die Aufbewahrung von Magnetbandkassetten in Kraftfahrzeugen sind Behälter bekannt, die durch Bodenplatten in mehrere, jeweils eine Kassette aufnehmenden Einzelkammern unterteilt sind. Zur Sicherung der Tonbandspulen können die Bodenplatten federnde Arretiereinrichtungen aufweisen, die nach dem Einschieben der Kassette in die Kammer in die Naben der Tonbandspulen eingreifen. Diese Arretiereinrichtungen dienen gleichzeitig auch dazu, die Tonbandkassette gegen Herausfallen aus dem Behälter zu sichern. Diese Funktion setzt relativ starke Klemmkräfte und stabile Arretiereinrichtungen voraus, die beim Ein- und Ausschieben der Kassette zu deren Beschädigung führen können. Ferner ist die Entnahme der Kassette aus dem Behälter sehr schwierig, da bei vollständig eingeschobener Kassette nur eine vom Abstand der Kassetten zueinander abhängige eingeschränkte Zugriffsmöglichkeit besteht.

Der Erfindung liegt die Aufgabe zugrunde, einen Behälter der eingangs genannten Gattung zu schaffen, der einfach herstellbar ist und eine gute Entnahmemöglichkeit der Kassette bietet.

Die Lösung dieser Aufgabe wird durch die im Hauptanspruch angegebenen Merkmale erreicht. Die Möglichkeit des nachträglichen Einschiebens der Bodenplatte in entsprechende Führungen des Gehäuses und deren Verrastung mit dem Gehäuse erlaubt es, die Bodenplatte mit einem Auswurfmechanismus für die Kassette zu versehen. Der Auswurfmechanismus wird durch ein an der Rückwand der Bodenplatte angeordnetes Federelement und einem die eingeschobene Kassette haltenden Schnappelement gebildet. Die Bodenplatte ist ferner auch mit den in die Spulennaben der Kassetten eingreifenden Arretiereinrichtungen bestückt. Die Komplettierung des Behälters erfolgt durch Einschieben der vollständig bestückten Bodenplatten in das Gehäuse.

In jede der durch die eingeschobenen Bodenplatten entstandene Einzelkammer kann nun eine Magnetbandkassette zur Aufbewahrung eingeschoben werden. Beim Einschieben der Magnetbandkassette werden die als Zapfen ausgebildeten Arretiereinrichtungen in Bewegungsrichtung der Magnetbandkassette umgebogen und federn nach vollständigem Einschieben in ihre ursprüngliche Lage zurück. Dabei greifen die Zapfen in die Zähne der Naben der Tonbandspulen ein und sichern die Tonbandspulen. Gleichzeitig greift auch ein Schnappelement in entsprechende Aussparungen des Kassettengehäuses ein und hält die Kassette in dieser Position gegen den Federdruck des beim Einschieben der Kassette verspannten Federelementes.

Mit einem über die Frontseite des Behälters überstehenden Riegelelement kann das die Kassette haltende Schnappelement wieder ausgerastet werden. Durch das Federelement wird die Kassette nach der Entriegelung soweit aus der Kammer geschoben, daß die Kassette ohne Probleme greifbar ist und aus dem Behälter entnommen werden kann.

Die bevorzugte Ausführungsform der Erfindung sieht vor, daß das Schnappelement ein durch Freisparungen gebildetes Segment der Bodenplatte ist, auf dem mit einer Anlaufschräge versehene und in die Aussparungen des Kassettengehäuses eingreifende Vorsprünge angeordnet sind. Entriegelt wird das Schnappelement mit einem in einer Aufnahme der Bodenplatte eingesetzten und verschiebbaren Riegelelement, das einen über die Frontseite des Gehäuses überstehenden Betätigungsknopf aufweist. Das Riegelelement ist über Führungsschienen und in Durchbrechungen des Riegelelementes eingreifende Rastvorsprünge in der Aufnahme der Bodenplatte gesichert.

Eine leicht umbiegbare Arretiereinrichtung zur Spulensicherung kann dadurch erreicht werden, daß die Arretiereinrichtung durch jeweils einen gelenkig gelagerten Zapfen gebildet ist, der über einen Federdrahtbügel mit der Bodenplatte verbunden ist.

Die Erfindung wird nachfolgend anhand der Zeichnung näher erläutert.

Es zeigen:
- Figur 1: einen Behälter mit Magnetbandkassetten,
- Figur 2: eine Draufsicht auf die Bodenplatte,
- Figur 3: eine Detailansicht des Schnappelementes im Schnitt,
- Figur 4: eine Detailansicht der Arretiervorrichtung im Schnitt.

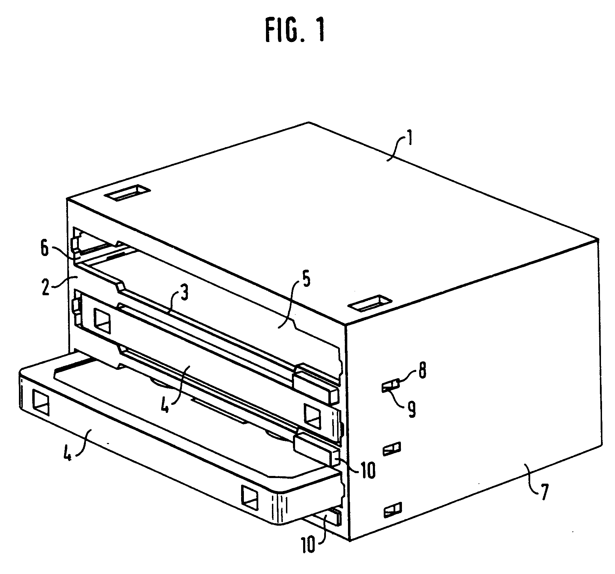

Der in Figur 1 dargestellte Behälter 1 weist eine Frontseite 2 auf, die mit mehreren Einschuböffnungen 3 für die Magnetbandkassetten 4 versehen ist. Die Aufteilung des Behälters 1 in Einzelkammern erfolgt über Bodenplatten 5, die von der Rückseite des Behälters in entsprechende Führungen 6 eingeschoben werden, die an der Innenseite der Seitenwände 7 angebracht sind. Die Bodenplatte 5 weist an ihren Seitenkanten Rastnocken 8 auf, die zur Verrastung der Bodenplatte mit dem Gehäuse in Aussparungen 9 der Seitenwände 7 des Behälters 1 eingreifen.

In der mittleren Kammer des dargestellten Behälters 1 ist die Magnetbandkassette 4 vollständig eingeschoben und in dieser Position gehalten. Nach dem Drücken des Betätigungsknopfes 10 wird die von dem Schnappelement 11 gehaltene Kassette 4 entriegelt und von den beiden Schenkeln des Federelementes 14 in die in der untersten Kammer des Behälters 1 dargestellten Entnahmeposition geschoben.

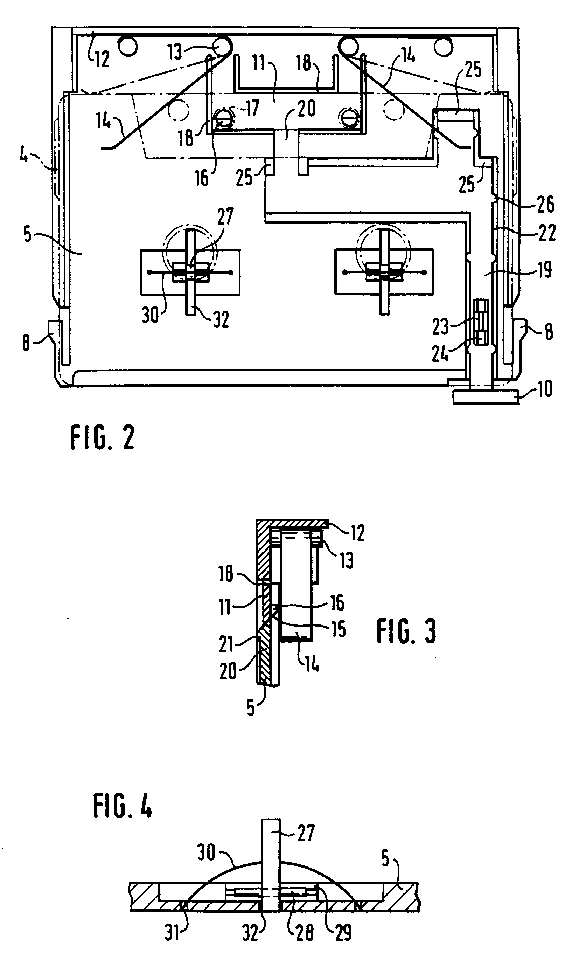

Figur 2 zeigt die vollständig bestückte Bodenplatte 5 vor dem Einschieben in den Behälter 1. Zwischen der Rückwand 12 und den auf der Bodenplatte angeordneten Stiften 13 ist das durch zwei Schenkel gebildete Federelement 14 eingeklemmt. Die beiden Schenkel des Federelementes sind soweit aufgebogen, daß eine Anlage am Kassettengehäuse sichergestellt ist und keine Beschädigung des Bandes eintreten kann. Beim Einschieben der Kassette 4 wird das Schnappelement 11 durch die Anlaufschräge 15 der Vorsprünge 16 nach unten weggedrückt. Nach Erreichen der richtigen Lageposition der strichpunktiert angedeuteten Kassette 4 sind zwei im Kassettengehäuse vorgesehenen Aussparungen 17 genau über den Vorsprüngen 16 des Schnappelementes 11 positioniert. Die Vorsprünge 16 können daher in diese Aussparungen 17 des Kassettengehäuses einrasten, und die Kassette gegen den Federdruck des Federelementes 14 in dieser Position halten. Der Federeffekt des Schnappelementes 11 wird durch parallel laufende Freisparungen 18 der Bodenplatte 5 erreicht, die so angeordnet sind, daß das Schnappelement 11 lediglich an zwei schmalen Anbindungen mit der Bodenplatte 5 verbunden ist.

Beim Drücken des Betätigungsknopfes 10 wird das Riegelelement 19 in Druckrichtung bewegt, so daß der an der Lasche 20 des Riegelelementes 19 angeordnete keilförmige Vorsprung 21 das Schnappelement 11 nach unten wegdrückt. (siehe Figur 3). Dabei rasten die Vorsprünge 16 aus den Aussparungen 17 des Kassettengehäuses aus, so daß die Federelemente 14 die Kassette 4 in die in Figur 1 dargestellte Entnahmeposition vorschieben können. Zur Sicherung des Riegelelementes 19 in einer entsprechenden Aufnahme 22 der Bodenplatte 5 ist ein Rastvorsprung 23 vorgesehen, der in eine als Langloch ausgebildete Durchbrechung 24 des Riegelelementes 19 eingreift. Ferner können an mehreren Stellen des Riegelelementes 19 Führungschienen 25 angeordnet sein, die in entsprechende Taschen der Bodenplatte 5 eingreifen. Zur besseren Führung des Riegelelementes 19 sind an den Seitenrändern des Riegelelementes Führungsnoppen 26 angeordnet.

Zur Sicherung der beiden Spulennaben der Kassette gegen Verdrehen sind in der Bodenplatte federnde Arretiereinrichtungen angeordnet. Gemäß Figur 4 besteht die Arretiereinrichtung aus einem Zapfen 27, der in beiden Bewegungsrichtungen der Kassette schwenkbar ist. Zu diesem Zweck weist der Zapfen 27 einen Gelenkbolzen 28 auf, der in ein Lager 29 eingeklipst ist. Der Zapfen 27 wird durch einen Federdrahtbügel 30, dessen Enden in Bohrungen 31 der Bodenplatte 5 eingesteckt sind, in senkrechter Stellung gehalten. Beim Umbiegen des Zapfens 27 kann dieser in die Durchbrechungen 32 der Bodenplatte 5 eintauchen. Nach dem Einschieben der Kassette 4 richtet der Federdrahtbügel 30 den Zapfen wieder auf, so daß dieser in die Zähne der Spulennabe der Kassette 4 eingreifen kann.

## Patentansprüche

1. Behälter für Magnetbandkassetten (4) mit aus einem mehrere Einschuböffnungen (3) aufweisenden und durch Bodenplatten (5) in Einzelkammern unterteilten Gehäuse, wobei die Bodenplatten mit in die Spulennaben der Kassette eingreifenden Arretiereinrichtungen (27) versehen sind, **dadurch gekennzeichnet**, daß die Bodenplatte (5) in entsprechende Führungen (6) des Gehäuses einschiebbar und mit dem Gehäuse verrastbar ist, sowie eine Rückwand (12) aufweist, an der ein durch die eingeschobene Kassette (4) verspannbares Federelement (14) angeordnet ist, und daß die Bodenplatte (5) mit einem entriegelbaren, die eingeschobene Kassette (4) haltenden Schnappelement (11) versehen ist.

2. Behälter nach Anspruch 1, **dadurch gekennzeichnet**, daß das Schnappelement (11) ein durch Freisparungen (18) gebildetes Segment der Bodenplatte (5) ist, auf dem mit einer Anlaufschräge (15) versehene und in Aussparungen der Kassette (4) eingreifende Vorsprünge (16) angeordnet sind.

3. Behälter nach Anspruch 1, **dadurch gekennzeichnet**, daß in einer Aufnahme (22) der Bodenplatte (5) ein verschiebbares Riegelelement (19) eingesetzt ist, das einen über die Frontseite des Gehäuses überstehenden Betätigungsknopf (10) und eine das Schnappelement (11) nach unten drückende Lasche (20) mit einem keilförmigen Vorsprung (21) aufweist.

4. Behälter nach Anspruch 3, **dadurch gekennzeichnet**, daß das Riegelelement (19) über stellenweise angeordnete Führungsschienen (25) und/oder in Durchbrechungen (24) des Riegelelementes (19) eingreifende Rastvorsprünge (23) in der Aufnahme (22) der Bodenplatte (5) gesichert ist.

5. Behälter nach einem der vorhergehenden Ansprüche, **dadurch gekennzeichnet**, daß die Arretiereinrichtung durch einen gelenkig gelagerten und in die Spulennabe der Kassette (4) eingreifenden Zapfen (27) gebildet ist, der über einen Federdrahtbügel (30) mit der Bodenplatte verbunden ist.

6. Behälter nach einem der vorhergehenden Ansprüche, **dadurch gekennzeichnet**, daß an den beiden Seitenrändern der Bodenplatten (5) je ein Rastnocken (8) angeordnet ist, der in einer entsprechenden Aussparung (9) der Seitenwand (7) des Gehäuses einrastet.

## Claims

1. A container for magnetic tape cassettes (4) comprising a housing that has several insertion openings (3) and is divided by base plates (5) into individual compartments, the base plates being provided with arresting devices (27) engaging in the reel hubs of the cassette, characterized in that the base plate (5) is arranged to be inserted in complementary guides (6) of the housing and to be locked into the housing, and has a rear wall (12) on which a spring element (14) capable of being stressed by the inserted cassette (4) is arranged, and the base plate (5) is provided with a releasable catch element (11) holding the inserted cassette (4).

2. A container according to claim 1, characterized in that the catch element (11) is a segment of the base plate (5) formed by cut-out areas (18), on which segment projections (16) provided with a run-up slope (15) and engaging in recesses of the cassette (4) are arranged.

3. A container according to claim 1, characterized in that a displaceable lock element (19) is inserted in a recess (22) of the base plate (5), which lock element has an operating button (10) projecting beyond the front side of the housing and a bar (20) with a wedge-shaped projection (21) pressing the catch element (11) downwards.

4. A container according to claim 3, characterized in that the lock element (19) is secured in the recess (22) of the base plate (5) by means of spaced guide rails (25) and/or by locking projections (23) engaging in openings (24) of the lock element (19).

5. A container according to one of the preceding claims, characterized in that the arresting device is formed by a hinged peg (27) engaging in the reel hub of the cassette (4), the peg being joined by means of a spring wire bow (30) to the base plate.

6. A container according to one of the preceding claims, characterized in that on each of the two side edges of the base plates (5) there is arranged a locking projection (8) which locks into a complementary recess (9) of the side wall (7) of the housing.

## Revendications

1. Casier pour cassettes (4) à bande magnétique, comportant un boîtier qui présente des ouvertures (3) d'insertion et qui est subdivisé en compartiments par des plaques (5) de base, ces plaques étant munies d'éléments (27) d'arrêt qui viennent en prise avec le moyeu des bobines de cassettes, casier caractérisé en ce que la plaque (5) de base peut être insérée dans des glissières (6) correspondantes du boîtier et être accrochée à ce boîtier ; cette plaque comporte une paroi postérieure (12), sur laquelle est monté un élément élastique (14) pouvant être bandé par l'entremise de la cassette (4) insérée, et elle comporte un élément (11) à déclic, déverrouillable, retenant la cassette (4) insérée.

2. Casier selon la revendication 1, caractérisé en ce que l'élément (11) à déclic est un segment de la plaque (5) de base, qui est formé par des saignées (18) et sur lequel sont disposés des ergots (16) présentant une rampe (15) et s'engageant dans des évidements de la cassette (4).

3. Casier selon la revendication 1, caractérisé en ce qu'un élément mobile de verrouillage (19), placé dans un logement (22) de la plaque (5) de base, comporte un bouton de manoeuvre (10) faisant saillie de la face antérieure du boîtier, ainsi qu'une languette (20) repoussant l'élément (11) à déclic vers le bas et portant un ergot (21) cunéiforme.

4. Casier selon la revendication 3, caractérisé en ce que l'élément de verrouillage (19) est retenu dans son logement (22) de la plaque (5) de base par l'entremise de glissières (25) disposées par endroits et/ou d'ergots (23) à cran d'arrêt s'engageant dans des découpures (24) de cet élément de verrouillage (19).

5. Casier selon l'une des revendications précédentes, caractérisé en ce que le dispositif d'arrêt est formé par une broche (27) articulée, venant en prise avec le moyeu d'une bobine de la cassette (4) et reliée à la plaque (5) de base par l'entremise d'un arceau (30) en fil d'acier à ressorts.

6. Casier selon l'une des revendications précédentes, caractérisé en ce que, sur chacun des bords latéraux des plaques (5) de base est disposé un ergot (8) à cran d'arrêt, qui s'engage dans une fenêtre (9) correspondante de la paroi latérale (7) respective du boîtier.
